# EUROPÄISCHE PATENTSCHRIFT

(11) **EP 2 614 285 B1**
(45) Veröffentlichungstag und Bekanntmachung des Hinweises auf die Patenterteilung: **21.01.2015**
(21) Anmeldenummer: 11764117.5
(22) Anmeldetag: 26.08.2011
(51) Int. Cl.: F16L 53/00

(54) **SYSTEM ZUM BETRIEB EINER ELEKTRISCH BEHEIZBAREN MEDIENLEITUNG SOWIE MEDIENLEITUNG FÜR EIN SOLCHES SYSTEM**
SYSTEM FOR OPERATING AN ELECTRICALLY HEATABLE MEDIUM LINE, AND MEDIUM LINE FOR A SYSTEM OF THIS TYPE
SYSTÈME POUR L'EXPLOITATION D'UNE CONDUITE À AGENT POUVANT ÊTRE CHAUFFÉE ÉLECTRIQUEMENT, AINSI QUE CONDUITE À AGENT POUR CE SYSTÈME

(30) Priorität: 10.09.2010 DE 202010012446 U
(43) Veröffentlichungstag der Anmeldung: 17.07.2013
(73) Patentinhaber: Voss Automotive GmbH, 51688 Wipperfürth (DE)
(72) Erfinder: ETSCHEID, Tobias, 51789 Lindlar (DE); SACHSE, Martin, 51688 Wipperfürth (DE)
(74) Vertreter: Patentanwälte Dr. Solf & Zapf
(86) Internationale Anmeldenummer: PCT/EP2011/064710
(87) Internationale Veröffentlichungsnummer: WO 2012/031909

(56) Entgegenhaltungen:
- DE-A1-102008 059 751
- DE-U1-202006 006 307

## Beschreibung

Die vorliegende Erfindung betrifft gemäß dem Oberbegriff des Anspruchs 1 ein System zum Betrieb einer mit einer bestimmten Länge konfektionierten, elektrisch beheizbaren Medienleitung.

Ein gattungsgemäßes System ist aus der DE 20 2006 006 307 U1 bekannt.

Weiterhin betrifft die Erfindung gemäß dem Anspruch 6 auch eine elektrisch beheizbare Medienleitung für ein solches System.

Das Dokument EP 1 985 908 A1 beschreibt verschiedene Ausführungen von beheizbaren Leitungsverbindern und konfektionierten Medienleitungen. Beispielsweise kann eine Fluidleitung beidendig mit jeweils einem Leitungsverbinder verbunden sein, wobei jeder Leitungsverbinder ein elektrisches Heizelement in Form eines gewendelt über den Umfang verlaufenden Heizdrahtes aufweist, und die Fluidleitung ist mit zwei Heizelementen ausgestattet, die ebenfalls von schraubenlinienförmig gewendelt über den Umfang und die Länge verlaufenden Heizdrähten gebildet sind. Alle Heizelemente sind elektrisch in Reihe geschaltet und an eine elektrische Betriebsspannung anzuschließen.

Derartige Leitungen werden häufig für solche Medien eingesetzt, die aufgrund eines relativ hohen Gefrierpunktes bereits bei relativ hohen, je nach Witterung durchaus möglichen Umgebungstemperaturen zum Gefrieren neigen. Dadurch können bestimmte Funktionen beeinträchtigt werden. Dies ist beispielsweise in Fahrzeugen bei Leitungen für eine Harnstofflösung der Fall, die als NOₓ-Reduktionsadditiv für Dieselmotoren mit so genannten SCR-Katalysatoren eingesetzt wird.

Speziell bei dieser bevorzugten Anwendung in Kraftfahrzeugen besteht das Problem, dass für verschiedene Fahrzeuge häufig auch unterschiedliche SCR-Systeme eingesetzt werden. Durch unterschiedliche Bauraum-Situationen variiert die Länge der verwendeten SCR-Leitungen von Fahrzeugtyp zu Fahrzeugtyp. Teilweise werden auch unterschiedliche Leitungsquerschnitte verwendet. Daraus resultieren auch verschiedene Innenvolumina pro Längeneinheit. Aufgrund dieser unterschiedlichen Leitungen werden somit auch unterschiedliche Heizleistungen benötigt, zumal eine möglichst konstante Auftauzeit gewährleistet werden soll. Dazu sollte eine möglichst konstante Heizleistung pro Längeneinheit, z. B. pro Meter, der Leitung vorgegeben sein, beispielsweise etwa 15 Watt pro Meter Leitungslänge. Da aber in aller Regel eine konstante Betriebsspannung, insbesondere eine Fahrzeug-Bordnetzspannung von z. B. 12 oder 24 V, zur Verfügung steht, muss für verschiedene Leitungslängen der elektrische Widerstand des Heizelementes pro Längeneinheit variiert werden. Dies führt zu dem entscheidenden Nachteil, dass für verschiedene Leitungslängen kein standardisiertes, mit dem Heizelement versehenes Leitungsmaterial verwendet werden kann. Vielmehr muss eine sehr hohe Anzahl verschiedener Leitungen bereitgestellt werden, oder es müssten sogar die Medienleitungen hinsichtlich der Heizelemente individuell in Anpassung an die jeweiligen Einbauerfordernisse angefertigt werden.

Der Erfindung liegt die Aufgabe zu Grunde, ein System und eine Medienleitung der genannten Art zu schaffen, um mit weitgehend standardisierten Heizleitungen auf einfache Weise einen Einsatz für verschiedene Einbausituationen zu ermöglichen.

Erfindungsgemäß wird dies mit einem System gemäß dem unabhängigen Anspruch 1 erreicht. Eine erfindungsgemäße Medienleitung ist Gegenstand des Anspruchs 6. Vorteilhafte Ausgestaltungen der Erfindung sind in den abhängigen Ansprüchen und in der anschließenden Beschreibung enthalten.

Erfindungsgemäß ist demnach die Medienleitung mit insbesondere elektronischen oder elektro-magnetischen, oder alternativ mit optisch auslesbaren Speichermitteln zum Abspeichern bzw. Bereitstellen von leitungsspezifischen Parameter-Daten ausgestattet, wobei die Speichermittel so ausgelegt sind, dass die gespeicherten bzw. zum Auslesen bereitgestellten Parameter-Daten von einer Steuereinheit zum Betrieb des Heizelementes und zur Anpassung der Heizleistung auswertbar sind. Es kann sich um "direkte Daten" handeln oder um "indirekte Daten" zur Berechnung weiterer leistungsspezifischer Daten.

Demnach muss nicht mehr nur die Medienleitung hinsichtlich ihrer elektrischen Heizmittel in Abhängigkeit von den leitungsspezifischen Parametern ausgelegt werden, sondern es erfolgt erfindungsgemäß eine Anpassung der elektrischen Heizleistung insbesondere durch Variation von Spannung und/oder Strom in Abhängigkeit von den gespeicherten leitungsspezifischen Parameter-Daten.

Das erfindungsgemäße System zum Betrieb der elektrisch beheizbaren Medienleitung besteht demnach aus der mit grundsätzlich beliebigen, insbesondere elektronischen und/oder optisch auslesbaren Speichermitteln ausgestatteten Medienleitung sowie aus einer Steuereinheit, die die in den Speichermitteln der Medienleitung abgelegten Parameter-Daten zum Betrieb des Heizelementes und zur Anpassung der Heizleistung auswertet.

Eine variable Einstellung der Heizleistung kann mit Vorteil durch eine zeitliche Taktung von Spannung bzw. Strom und insbesondere mittels einer Pulsweitenmodulation (PWM) erfolgen, um die Dauer der Bestromung des/jedes Heizelementes zu variieren.

An dieser Stelle sollen noch einige Hintergründe erläutert werden. In der Automobilindustrie gelten besondere Bedingungen für eine gesetzliche Zulassung, die so genannte Homologation. Deshalb müssen bestimmte Parameter fahrzeugspezifisch bei der Programmierung der Fahrzeug-Kontrollsteuerung hinterlegt werden, um bei der geforderten Homologation mit geprüft werden zu können. Dies gilt auch für Parameter von beheizbaren Medienleitungen innerhalb des Fahrzeugs. Deshalb wird zumindest der jeweilige elektrische Widerstand fahrzeugseitig aufgrund der OBD (On Board Diagnose) abgefragt und kontrolliert, um die Einsatzbereitschaft zu gewährleisten. Um die Funktion in einem definierten Bereich zu gewährleisten, wird auch eine bestimmte Toleranz abgefragt, die vorher bekannt sein muss.

Besonders für Fahrzeuge, wie beispielsweise Off Road-Fahrzeuge, mit hoher Varianz und kleiner Stückzahl würden deshalb - wegen jeweils erneuter Programmierung und der notwendigen erneuten Homologation -erhebliche Kosten entstehen.

Erfindungsgemäß werden nun aber die angesprochenen Daten bzw. Parameter, wie insbesondere elektrischer Widerstand, Toleranz, Länge der Leitung, Leitungsquerschnitt, Volumen, Leistungsaufnahme, gegebenenfalls Widerstands- bzw. Temperaturabhängigkeit, in der Fahrzeug-Software nicht mehr als feste Größen hinterlegt, wodurch sie nur für die Validierung und Homologation eines speziellen Fahrzeugtyps gelten würden, sondern sie werden als freie Variablen programmiert, die beim Fahrzeugstart oder einmalig bei der Fahrzeugmontage im Werk aus den elektronischen Speichermitteln der erfindungsgemäßen Medienleitung (en) ausgelesen werden. Somit gilt die gleiche Software - bezogen auf die Medienleitungsdaten - für alle Fahrzeugtypen und muss diesbezüglich nur einmal homologisiert werden.

Die Parameter-Daten selber werden über die der Medienleitung zugehörigen Speichermittel, insbesondere einen in oder an der Leitung integrierten Speicher-Chip, bereitgestellt, wobei eine Übertragung der Daten über ein geeignetes Protokoll erfolgen kann, wie z. B. CAN, LIN, FlexRay (eingetragene Marke der Firma Daimler AG) oder dergleichen. Die Übertragung kann dabei z. B. per Funk, insbesondere RFID, oder über Kabelanbindung erfolgen. Für eine Manipulationssicherheit können die Speichermittel mit einer speziellen Identifikationskennung (ID) ausgestattet werden, die beim Einlesen berücksichtigt wird.

Alternativ oder aber zusätzlich kann als Speichermittel auch eine optisch - mittels eines Scanners - auslesbare Kodierung vorgesehen sein, beispielsweise in Form eines eindimensionalen Strichcodes (Bar-Code) oder einer zweidimensionalen Matrix-Kodierung (Daten-oder DOT-Matrix, wie z. B. QR-Code).

Die erfindungsgemäßen Speichermittel werden - spezifisch für jede konfektionierte Medienleitung - mit entsprechenden Daten konzipiert, z. B. programmiert. Dies kann nach Fertigstellung der Medienleitung im Werk erfolgen, beispielsweise in Verbindung mit einer Endprüfung, einer so genannten "End-of-Line"-Prüfung, wobei insbesondere auch der elektrisch Heizelement-Widerstand der jeweiligen Medienleitung bestimmt, auf Toleranzeinhaltung geprüft und gespeichert oder kodiert und in den Speichermitteln vorgegeben wird. Zusätzlich können beliebige weitere Daten gespeichert oder kodiert werden, wie Länge und Querschnitt der Leitung, Produktions-Charge, Produktionszeit (Datum, Uhrzeit) und dergleichen.

Die erfindungsgemäßen Speichermittel können bei Bedarf mit einem beliebigen, visuell lesbaren Kennzeichnungsetikett kombiniert werden.

Weitere vorteilhafte Ausgestaltungen der Erfindung ergeben sich aus den abhängigen Ansprüchen und der folgenden Beschreibung.

Anhand der Zeichnung soll die Erfindung beispielhaft weitergehend erläutert werden. Es zeigen:
- Fig. 1: ein Ausführungsbeispiel einer elektrisch beheizbaren Medienleitung in einer gekürzten Seitenansicht,
- Fig. 2: eine entsprechende Medienleitung ähnlich Fig. 1 im Teil-Längsschnitt und
- Fig. 3: eine stark schematische, blockschaltbildartige Darstellung eines erfindungsgemäßen Systems zum Betrieb einer Medienleitung nach der Erfindung.

In den verschiedenen Figuren der Zeichnung sind gleiche Teile stets mit den gleichen Bezugszeichen versehen.

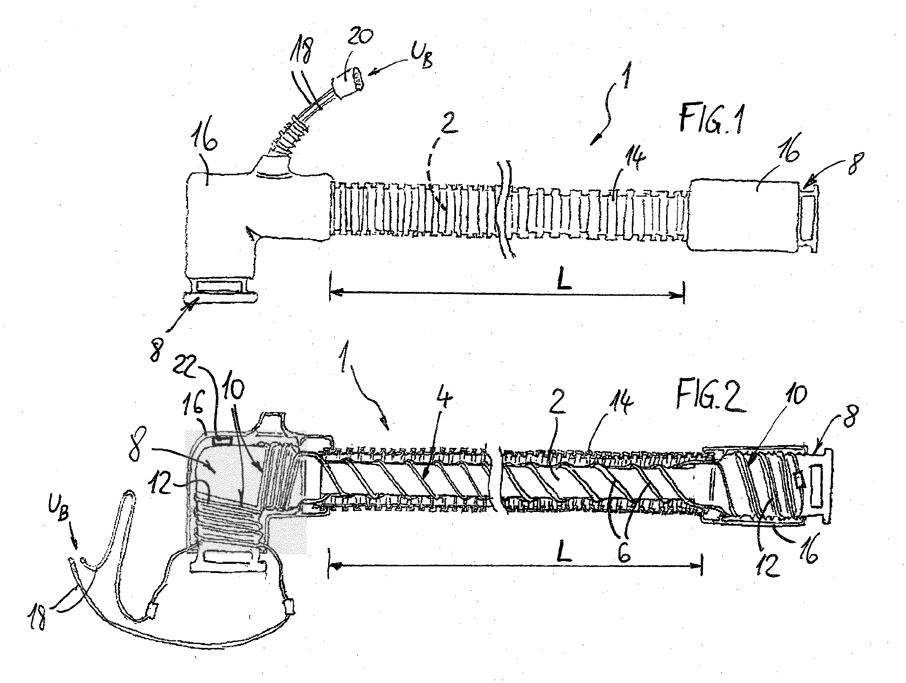

Wie sich zunächst aus Fig. 1 und 2 ergibt, besteht eine elektrisch beheizbare Medienleitung 1 aus einer Fluidleitung 2, die mit einer bestimmten Länge L konfektioniert, d. h. abgelängt ist. Bei der Fluidleitung 2 kann es sich um eine Rohr- oder Schlauchleitung handeln. Die Fluidleitung 2 ist mit mindestens einem über die Länge L hinweg angeordneten, elektrischen Heizelement 4 ausgestattet, um die Fluidleitung 2 bzw. das darin geführte Medium mit einer bestimmten Heizleistung zu beaufschlagen.

In der in Fig. 2 dargestellten, bevorzugten Ausführung weist die Fluidleitung 2 zwei elektrische Heizelemente 4 auf, wobei jedes Heizelement 4 von einem schraubenlinienartig gewendelten Heizdraht 6 gebildet ist. Die beiden Heizdrähte 6 der zwei Heizelemente 4 verlaufen wendelförmig in Leitungsrichtung gegeneinander versetzt und bilden somit eine Doppelwendel.

In weiterer bevorzugter Ausgestaltung ist die Fluidleitung 2 zumindest einendig, bevorzugt an jedem ihrer zwei Enden, mit einem Leitungsverbinder 8 verbunden, d. h. konfektioniert, wobei bevorzugt jeder Leitungsverbinder 8 ebenfalls elektrisch beheizbar ist und dazu mindestens ein elektrisches Heizelement 10 aufweist. Auch diese Heizelemente 10 sind bevorzugt jeweils von einem schraubenlinienartig gewendelten Heizdraht 12 gebildet. Die Heizelemente 4, 10 können jeweils außen auf der Oberfläche der Fluidleitung 2 bzw. des Leitungsverbinders 8 angeordnet sein, sie können aber auch jeweils in einem inneren Fluidkanal verlaufen und/oder in eine Umfangswandung eingebettet sein, z. B. in einer so genannten multi-layer-Ausführung.

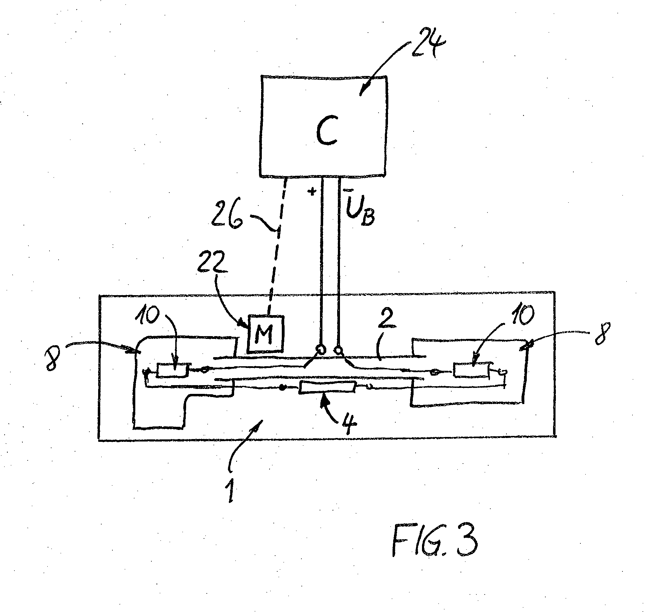

Wie sich aus Fig. 3 ergibt, wo beispielhaft für die Fluidleitung 2 nur ein Heizelement 4 als Ersatzwiderstand veranschaulicht ist, sind alle Heizelemente 4, 10 bevorzugt elektrisch in Reihe geschaltet und werden mit einer Betriebsspannung U_{B} versorgt.

Wie sich weiter aus Fig. 1 und 2 ergibt, ist die Fluidleitung 2 einschließlich der Heizelemente 4 bevorzugt von einer Umhüllung 14 insbesondere in Form eines Wellrohrs umgeben. Außerdem ist es vorteilhaft, wenn jeder Leitungsverbinder 8 gemeinsam mit seinem Heizelement 10 von einer gehäuseartigen Kapselung 16 umschlossen ist.

Zum Anschluss der Betriebsspannung U_{B} sind Anschlussdrähte 18 nach außen geführt, und zwar bevorzugt aus einer der Kapselungen 16. Gemäß Fig. 1 kann zum Anschluss ein Steckverbinder 20 vorgesehen sein.

Wie sich nun aus Fig. 3 ergibt, ist die Medienleitung 1 erfindungsgemäß mit Speichermitteln 22 ausgestattet (Memory M). Diese Speichermittel 22 dienen zum Abspeichern bzw. Bereitstellen von leitungsspezifischen Parameter-Daten, die von einer Steuereinheit 24 (Controller C) zum Betrieb des Heizelementes 4 bzw. der in Reihe geschalteten Heizelemente 4, 10 und zur Anpassung der Heizleistung auswertbar sind. In bevorzugter Ausgestaltung sind die Speichermittel 22 als passiver oder semi-passiver Transponder ausgebildet, der von der Steuereinheit 24 über eine Datenverbindung 26 auslesbar ist. Es kann auch eine beliebige andere geeignete Speicher-Art verwendet werden. So ist auch eine optisch auslesbare Kodierung im Rahmen der Erfindung möglich. Weiterhin kann es sich um RAM- oder ROM-Speicher handeln (RAM = random access memory; ROM = read only memory).

Es ist vorteilhaft, wenn die Speichermittel 22 integriert innerhalb der Leitungsumhüllung 14 oder innerhalb einer der Kapselungen 16 eines der Leitungsverbinder 8 (vgl. Fig. 2) untergebracht sind. Weiterhin können die Speichermittel 22 auch in den elektrischen Steckverbinder 20 integriert sein.

Erfindungsgemäß wird demnach ein neuartiges System zum Betrieb der elektrisch beheizbaren Medienleitung 1 gebildet. Dieses System besteht einerseits aus der Medienleitung 1, die Speichermittel 22 zum Abspeichern von leitungsspezifischen Parameter-Daten aufweist, sowie aus einer Steuereinheit 24, die die gespeicherten Parameter-Daten zum Betrieb des Heizelementes 4 bzw. aller in Reihe geschalteten Heizelemente 4, 10 und zur Anpassung der Heizleistung auswertet. Die Anpassung der Heizleistung kann eine einmalige Vorgabe, aber auch eine ständige Regelung sein, insbesondere unter Einsatz einer PWM-Steuerung (Pulsweitenmodulation).

Die Datenverbindung 26, die in Fig. 3 nur gestrichelt angedeutet ist, kann als Leitungsverbindung oder drahtlos, gegebenenfalls auch zumindest teilweise als optische Sichtverbindung zwischen einer Kodierung und einem optischen Lesegerät, einem so genannten "Scanner", ausgebildet sein. Bevorzugt erfolgt eine elektronische Datenübertragung über ein Protokoll, beispielsweise CAN, LIN oder FlexRay (eingetragene Marke). Dabei ist die Datenverbindung als Funkverbindung, insbesondere als RFID-Transpondersystem, ausgebildet.

Im praktischen Einsatz in Kraftfahrzeugen können Medienleitungen 1 mit stark unterschiedlichen Längen L erforderlich sein. Bei Verwendung einer standardisiert mit dem oder den Heizelementen 4 vorgefertigten Fluidleitung 2 ändert sich mit unterschiedlicher Länge auch der elektrische Widerstand des jeweiligen Heizelementes 4. Dies kann erfindungsgemäß von der Steuereinheit 24 anhand der abgefragten Parameter-Daten aus den Speichermitteln 22 durch eine bestimmte Variation der Ansteuerung kompensiert werden. Dazu wird insbesondere die Betriebsspannung U_{B} entsprechend variiert, und zwar wahlweise ausgehend von einer bestimmten Versorgungsspannung, z.B. der Fahrzeug-Bordspannung, verkleinert, insbesondere mittels Taktung und PWM-Steuerung, oder auch vergrößert, beispielsweise über einen Aufwärtswandler.

Die Erfindung ist nicht auf die dargestellten und beschriebenen Ausführungsbeispiele beschränkt, sondern umfasst den durch die Ansprüche bestimmten Schutzbereich.

## Patentansprüche

1. Eine Steuereinheit (24) und eine elektrisch beheizbare Medienleitung (1) umfassendes System zum Betrieb der Medienleitung (1), die aus einer Fluidleitung (2) mit einer bestimmten Länge (L) und mindestens einem über die Länge (L) hinweg angeordneten elektrischen Heizelement (4) zum Beaufschlagen der Fluidleitung (2) mit einer Heizleistung besteht,
**dadurch gekennzeichnet, dass** die Medienleitung (1) Speichermittel (22) für leitungsspezifische Parameter-Daten aufweist, wobei die Parameter-Daten mit einer Leseeinrichtung auslesbar sind und die Steuereinheit (24) die Parameter-Daten zum Betrieb des Heizelementes (4) und zur Anpassung der Heizleistung auswertet.

2. System nach Anspruch 1,
**dadurch gekennzeichnet, dass** die Speichermittel (22) elektronisch auslesbar sind, wobei die Steuereinheit (24) über eine Datenverbindung (26) mit den Speichermitteln (22) verbunden oder verbindbar ist, und wobei die Datenverbindung (26) als Leitungsverbindung oder drahtlos ausgebildet ist.

3. System nach Anspruch 2,
**dadurch gekennzeichnet, dass** eine Datenübertragung über ein Protokoll, wie z.B. CAN oder LIN, erfolgt.

4. System nach Anspruch 2 oder 3,
**dadurch gekennzeichnet, dass** als Speichermittel (22) mindestens ein Transponder vorgesehen ist, wobei die Datenverbindung als Funkverbindung, insbesondere als RFID-Transpondersystem, ausgebildet ist.

5. System nach einem der Ansprüche 1 bis 4,
**dadurch gekennzeichnet, dass** als Speichermittel (22) mindestens eine optisch oder optisch-elektronisch auslesbare Kodierung, wie ein Strich-Code und/oder ein Datenmatrix-Code, vorgesehen ist.

6. Konfektionierte, elektrisch beheizbare Medienleitung (1) zur Verwendung in einem System nach einem der vorhergehenden Ansprüche, bestehend aus einer Fluidleitung (2) mit einer bestimmten Länge (L) und mindestens einem über die Länge (L) hinweg angeordneten elektrischen Heizelement (4) zum Beaufschlagen der Fluidleitung (2) mit einer Heizleistung,
**gekennzeichnet durch** Speichermittel (22) für mit einer Leseeinrichtung auslesbare, leitungsspezifische Parameter-Daten, wobei die Speichermittel (22) derart ausgebildet sind, dass gespeicherte Parameter-Daten an eine zum System gehörende, externe Steuereinheit (24) übertragbar sind.

7. Medienleitung nach Anspruch 6,
**dadurch gekennzeichnet, dass** die Speichermittel (22) als insbesondere passiver oder semi-passiver Transponder ausgebildet sind, der von der Steuereinheit (24) über eine Datenverbindung (26) auslesbar ist.

8. Medienleitung nach Anspruch 6 oder 7,
**dadurch gekennzeichnet, dass** die Fluidleitung (2) zumindest einendig, bevorzugt an jedem ihrer zwei Enden, mit einem Leitungsverbinder (8) verbunden ist, der ebenfalls elektrisch beheizbar ist und dazu mindestens ein elektrisches Heizelement (10) aufweist.

9. Medienleitung nach Anspruch 8,
**dadurch gekennzeichnet, dass** die Heizelemente (4, 10) elektrisch in Reihe geschaltet sind.

10. Medienleitung nach einem der Ansprüche 6 bis 9,
**dadurch gekennzeichnet, dass** die Speichermittel (22) integriert innerhalb einer Leitungsumhüllung (14) oder innerhalb einer Kapselung (16) des/eines Leitungsverbinders (8) oder innerhalb eines elektrischen Steckverbinders (20) untergebracht sind.

11. Medienleitung nach einem der Ansprüche 6 bis 10,
**dadurch gekennzeichnet, dass** die Speichermittel (22) als optisch oder optisch-elektronisch auslesbare Kodierung, wie Strich-Code oder Datenmatrix-Code, ausgebildet sind.

12. Medienleitung nach einem der Ansprüche 6 bis 11,
**dadurch gekennzeichnet, dass** die Speichermittel (22) als RAM-Speicher, d.h. Schreib- und Lesespeicher, ausgebildet sind.

13. Medienleitung nach einem der Ansprüche 6 bis 11,
**dadurch gekennzeichnet, dass** die Speichermittel (22) als nur lesbarer ROM-Speicher ausgebildet sind.

14. Medienleitung nach einem der Ansprüche 6 bis 13,
**dadurch gekennzeichnet, dass** das/jedes Heizelement (4; 10) von einem schraubenlinienartig gewendelten, bevorzugt außen aufgebrachten Heizdraht (6; 12) gebildet ist.

15. Medienleitung nach einem der Ansprüche 6 bis 14,
**dadurch gekennzeichnet, dass** das/jedes Heizelement (4) der Fluidleitung (2) in ihrem inneren Fluidkanal oder in ihrer Leitungswandung angeordnet ist.

## Claims

1. System, comprising a control unit (24) and an electrically heatable media line (1), for operating the media line (1), which media line consists of a fluid line (2) having a specific length (L) and at least one electric heating element (4) arranged over the length (L) for applying a heating power to the fluid line (2), **characterised in that** the media line (1) has memory means (22) for line-specific parameter data, it being possible to read out the parameter data using a reading device and the control unit (24) evaluating the parameter data for operating the heating element (4) and for adapting the heating power.

2. System according to claim 1, **characterised in that** the memory means (22) can be read out electronically, the control unit (24) being connected or connectable by a data connection (26) to the memory means (22), and the data connection (26) being configured as a line connection or wirelessly.

3. System according to claim 2, **characterised in that** a data transmission takes place via a protocol, such as, for example, CAN or LIN.

4. System according to claim 2 or 3, **characterised in that** at least one transponder is provided as the memory means (22), the data connection being configured as a radio connection, in particular as an RFID transponder system.

5. System according to any one of claims 1 to 4, **characterised in that** at least one coding, which can be read out optically or optically-electronically, such as a barcode and/or a data matrix code, is provided as the memory means (22).

6. Pre-assembled, electrically heatable media line (1) for use in a system according to any one of the preceding claims, consisting of a fluid line (2) having a specific length (L) and at least one electric heating element (4) arranged over the length (L) for applying a heating power to the fluid line (2), **characterised by** memory means (22) for line-specific parameter data that can be read out using a reading device, the memory means (22) being configured in such a way that stored parameter data can be transmitted to an external control unit (24) belonging to the system.

7. Media line according to claim 6, **characterised in that** the memory means (22) are configured as an in particular passive or semi-passive transponder, which can be read out by the control unit (24) by means of a data connection (26).

8. Media line according to claim 6 or 7, **characterised in that** the fluid line (2), at least at one end, preferably at each of its two ends, is connected to a line connector (8), which is also electrically heatable and has at least one electric heating element (10) for this purpose.

9. Media line according to claim 8, **characterised in that** the heating elements (4, 10) are electrically connected in series.

10. Media line according to any one of claims 6 to 9, **characterised in that** the memory means (22) are accommodated integrated within a line sheath (14) or within an encapsulation (16) of the/a line connector (8) or within an electric plug connector (20).

11. Media line according to any one of claims 6 to 10, **characterised in that** the memory means (22) are configured as a coding, which can be read out optically or optically-electronically, such as a barcode or data matrix code.

12. Media line according to any one of claims 6 to 11, **characterised in that** the memory means (22) are configured as RAM memories, i.e. write/read memories.

13. Media line according to any one of claims 6 to 11, **characterised in that** the memory means (22) are configured as only readable ROM memories.

14. Media line according to any one of claims 6 to 13, **characterised in that** the/each heating element (4; 10) is formed by a helically coiled heating wire (6; 12), which is preferably applied on the outside.

15. Media line according to any one of claims 6 to 14, **characterised in that** the/each heating element (4) of the fluid line (2) is arranged in its inner fluid channel or in its line wall.

## Revendications

1. Système comprenant une unité de commande (24) et une conduite à agent (1) pouvant être chauffée électriquement, servant à faire fonctionner la conduite à agent (1), laquelle est constituée d'une conduite de fluide (2) présentant une longueur (L) définie et au moins d'un élément de chauffage (4) électrique disposé sur toute la longueur (L), servant à soumettre la conduite de fluide (2) à l'action d'une puissance de chauffage,
**caractérisé en ce que** la conduite à agent (1) présente des moyens de mémoire (22) pour des données de paramètres spécifiques à la conduite, dans lequel les données de paramètre peuvent être lues à l'aide d'un dispositif de lecture et que l'unité de commande (24) analyse les données de paramètre servant à faire fonctionner l'élément de chauffage (4) et servant à adapter la puissance de chauffage.

2. Système selon la revendication 1,
**caractérisé en ce que** les moyens de mémoire (22) peuvent être lus de manière électronique, dans lequel l'unité de commande (24) est reliée ou peut être reliée par l'intermédiaire d'une liaison de données (26) aux moyens de mémoire (22), et dans lequel la liaison de données (26) est réalisée sous la forme d'une liaison de conduite ou sans fil.

3. Système selon la revendication 2,
**caractérisé en ce qu'**un transfert de données est effectué par l'intermédiaire d'un protocole, tel que CAN ou LIN.

4. Système selon la revendication 2 ou 3,
**caractérisé en ce qu'**au moins un transpondeur est prévu en tant que moyen de mémoire (22), dans lequel la liaison de données est réalisée sous la forme d'une liaison radio, en particulier sous la forme d'un système de transpondeur RFID.

5. Système selon l'une quelconque des revendications 1 à 4,
**caractérisé en ce qu'**est prévu en tant que moyen de mémoire (22), au moins un codage pouvant être lu de manière optique ou de manière optique et électronique, tel qu'un code à barres et/ou un code de matrice de données.

6. Conduite à agent (1) fabriquée, pouvant être chauffée électriquement, destinée à être utilisée dans un système selon l'une quelconque des revendications précédentes, constituée d'une conduite de fluide (2) présentant une longueur (L) définie et au moins d'un élément de chauffage (4) électrique disposé sur toute la longueur (L), servant à soumettre la conduite de fluide (2) à l'action d'une puissance de chauffage,
**caractérisée par** des moyens de mémoire (22) pour des données de paramètre spécifiques à une conduite, pouvant être lues à l'aide d'un dispositif de lecture, dans lequel les moyens de mémoire (22) sont réalisés de telle manière que des données de paramètre mémorisées peuvent être transférées à une unité de commande (24) externe appartenant au système.

7. Conduite à agent selon la revendication 6,
**caractérisée en ce que** les moyens de mémoire (22) sont réalisés sous la forme d'un transpondeur en particulier passif ou semi-passif, qui peut être lu par l'unité de commande (24) par l'intermédiaire d'une liaison de données (26).

8. Conduite à agent selon la revendication 6 ou 7,
**caractérisée en ce que** la conduite de fluide (2) est reliée au moins au niveau d'une extrémité, de préférence au niveau de chacune de ses deux extrémités, à un connecteur de conduite (8), qui peut être de la même manière chauffé électriquement et qui présente en complément au moins un élément de chauffage (10) électrique.

9. Conduite à agent selon la revendication 8,
**caractérisée en ce que** les éléments de chauffage (4, 10) sont montés en série sur le plan électrique.

10. Conduite à agent selon l'une quelconque des revendications 6 à 9, **caractérisée en ce que** les moyens de mémoire (22) sont logés de manière intégrée à l'intérieur d'une gaine de conduite (14) ou à l'intérieur d'un système d'encapsulage (16) du/d'un connecteur de conduite (8) ou à l'intérieur d'un connecteur enfichable (20) électrique.

11. Conduite à agent selon l'une quelconque des revendications 6 à 10, **caractérisée en ce que** les moyens de mémoire (22) sont réalisés sous la forme d'un codage pouvant être lu de manière optique ou de manière optique et électronique tel qu'un code à barres ou un code à matrice de données.

12. Conduite à agent selon l'une quelconque des revendications 6 à 11, **caractérisée en ce que** les moyens de mémoire (22) sont réalisés sous la forme d'une mémoire RAM, c'est à dire sous la forme d'une mémoire inscriptible et à lecture.

13. Conduite à agent selon l'une quelconque des revendications 6 à 11, **caractérisée en ce que** les moyens de mémoire (22) sont réalisés sous la forme d'une mémoire ROM pouvant être lue uniquement.

14. Conduite à agent selon l'une quelconque des revendications 6 à 13, **caractérisée en ce que** l'élément de chauffage/chaque élément de chauffage (4 ; 10) est formé par un fil métallique de chauffage (6 ; 12) spiralé à la manière d'une hélice, de préférence appliqué côté extérieur.

15. Conduite à agent selon l'une quelconque des revendications 6 à 14,
**caractérisée en ce que** l'élément de chauffage/chaque élément de chauffage (4) de la conduite de fluide (2) est disposé dans le canal de fluide intérieur ou dans la paroi de conduite de cette dernière.
